(19) Europäisches Patentamt
European Patent Office
Office européen des brevets

(11) EP 2 729 695 B1

(12) EUROPÄISCHE PATENTSCHRIFT

(45) Veröffentlichungstag und Bekanntmachung des Hinweises auf die Patenterteilung:
06.05.2015 Patentblatt 2015/19

(51) Int Cl.:
F03B 13/10 (2006.01)     F03B 15/00 (2006.01)
F03B 11/04 (2006.01)     F03B 13/26 (2006.01)

(21) Anmeldenummer: 12738027.7

(22) Anmeldetag: 02.07.2012

(86) Internationale Anmeldenummer:
PCT/EP2012/002764

(87) Internationale Veröffentlichungsnummer:
WO 2013/004369 (10.01.2013 Gazette 2013/02)

(54) **STRÖMUNGSKRAFTWERK UND VERFAHREN FÜR DESSEN BETRIEB**

RUN-OF-THE-RIVER OR MARINE CURRENT POWER PLANT AND METHOD FOR OPERATING THE SAME

CENTRALE HYDROMOTRICE ET PROCÉDÉ POUR LA FAIRE FONCTIONNER

(84) Benannte Vertragsstaaten:
AL AT BE BG CH CY CZ DE DK EE ES FI FR GB GR HR HU IE IS IT LI LT LU LV MC MK MT NL NO PL PT RO RS SE SI SK SM TR

(30) Priorität: 06.07.2011 DE 102011107286

(43) Veröffentlichungstag der Anmeldung:
14.05.2014 Patentblatt 2014/20

(73) Patentinhaber: Voith Patent GmbH
89522 Heidenheim (DE)

(72) Erfinder:
• HOLSTEIN, Benjamin
89518 Heidenheim (DE)
• PERNER, Norman
89233 Neu-Ulm (DE)
• BISKUP, Frank
73527 Schwäbisch Gmünd (DE)

(74) Vertreter: Dr. Weitzel & Partner
Patent- und Rechtsanwälte mbB
Friedenstrasse 10
89522 Heidenheim (DE)

(56) Entgegenhaltungen:
EP-A1- 0 878 624         DE-A1-102008 007 043
DE-B3-102008 053 732     JP-A- 2001 289 144
JP-A- 2003 262 180

**Beschreibung**

Die Erfindung betrifft ein Strömungskraftwerk gemäß den oberbegrifflichen Merkmalen der unabhängigen Ansprüche, das insbesondere als Gezeitenkraftwerk eingesetzt wird, sowie ein Verfahren für dessen Betrieb.

Strömungskraftwerke mit propellerförmigen, als Auftriebsläufer ausgebildeten Wasserturbinen in Verbindung mit einem elektrischen Generator, die als freistehende Einheiten von einer Gewässerströmung angetrieben werden, sind bekannt. Vorliegend wird ein Axialturbinen-Design mit einer horizontalen Drehachse bevorzugt. Dabei bietet sich der Einsatz solcher Strömungskraftwerke zur Energiegewinnung aus einem Fließgewässer oder einer Meeresströmung an Orten an, an denen keine umfangreichen Sperrwerke errichtet werden können. Zur Energiegewinnung aus Gezeiten kann eine Wasserturbine mit einem bidirektional anströmbaren Profil verwendet werden oder das Strömungskraftwerk lässt sich als Ganzes bei einem Strömungsrichtungswechsel nachführen.

Ohne die typischerweise in Dammstrukturen vorgesehenen Verschlussinechanismen in den zur Wasserturbine führenden Strömungskanälen, besteht bei Überlast für gattungsgemäße Strömungskraftwerke keine Möglichkeit zur Abkopplung von der Umgebungsströmung. Entsprechend müssen Maßnahmen ergriffen werden, um die Anlagen im Fall einer Starkanströmung zu schützen.

Eine Möglichkeit zur Leistungs- und Lastabregelung besteht darin, die Wasserturbine mit drehbar an einem Nabenteil befestigten Rotorblättern auszustatten. Zur Abregelung werden bei dieser Bauform die Rotorblätter in die Fahnenstellung geführt. Die hierfür notwendige, drehbare Rotorblatthalterung ist jedoch insbesondere für die zur effizienten Energiegewinnung aus langsam fließenden Strömungen notwendigen, großbauenden Anlagen konstruktiv aufwendig. Des Weiteren stellen die für die Blattwinkeleinstellung verwendeten Lagerungskomponenten und Aktoren sowie die zugehörige Steuerung ein erhöhtes Ausfallrisiko dar. Da gattungsgemäße Anlagen typischerweise vollständig tauchen, kann eine Anlagenwartung nur erschwert ausgeführt werden, sodass ein vereinfachtes Anlagenkonzept mit drehstarr angelenkten Rotorblättern zu einer Anlage mit einer höheren Lebensdauer führt.

Eine alternative Maßnahme zur Abregelung, die insbesondere für Wasserturbinen mit drehstarr befestigten Rotorblättern verwendet wird, besteht darin, das Strömungskraftwerk beim Erreichen einer vorgegebenen Leistungs- oder Lastschwelle mit einer Schnelllaufzahl oberhalb der leistungsoptimalen Schnelllaufzahl zu betreiben. Exemplarisch wird auf die DE 10 2008 053 732 B3 verwiesen. Dabei stellt die Schnelllaufzahl das Verhältnis zwischen der Blattspitzengeschwindigkeit und der über den Rotorkreis gemittelten Anströmungsgeschwindigkeit dar.

Der für die Abregelung verwendete Überdrehzahlbereich reicht von der leistungsoptimalen Schnelllaufzahl bis zu einer der Durchgangsdrehzahl zugeordneten Schnelllaufzahl, für die das bremsende Generatormoment wegfällt. Dabei können die zur Abregelung bei einer Starkanströmung verwendeten Schnelllaufzahlen zu Fliehkräften führen, die die Anlage stark belasten. Für hohe Schnelllaufzahlen wird die von der Wasserturbine aufgenommene Leistung effektiv reduziert, allerdings nehmen die von der Wasserturbine aufgenommenen Schubkräfte nicht in gleichem Maße ab. So liegt bei der Durchgangsdrehzahl ein Schubbeiwert vor, für den bei einer weiter zunehmenden mittleren Anströmungsgeschwindigkeit kritische Schublasten auf die Anlage einwirken können.

Der Erfindung liegt die Aufgabe zugrunde ein Strömungskraftwerk und ein Verfahren für den Betrieb einer Wasserturbine im Überdrehzahlbereich anzugeben, das eine effektive Abregelung bezüglich der Leistung und der Lasten, insbesondere der axialen Schublast, bereits bei kleinen Schnelllaufzahlen bewirkt. Insbesondere soll eine Abregelung für eine Schnelllaufzahl erfolgen, die hinreichend unterhalb der der Durchgangsdrehzahl zugeordneten Schnelllaufzahl liegt.

Die der Erfindung zugrunde liegende Aufgabe wird durch die Merkmale der unabhängigen Ansprüche gelöst. Vorteilhafte Ausführungen ergeben sich aus den Unteransprüchen.

Dabei geht die Erfindung von einem gattungsgemäßen Strömungskraftwerk, insbesondere einem Gezeitenkraftwerk, aus. Dies betrifft ein Strömungskraftwerk, das eine Wasserturbine mit mehreren Rotorblättern umfasst, die als Auftriebsläufer ausgeführt sind. Besonders bevorzugt wird eine Horizontalläuferturbine. Die Wasserturbine treibt wenigstens mittelbar einen elektrischen Generator an, wobei ein Direktantrieb, das heißt eine drehstarre Kopplung des elektrischen Generators mit der Wasserturbine über eine Antriebswelle, bevorzugt wird. Alternativ kann die Kopplung zwischen dem elektrischen Generator und der Wasserturbine mittelbar, beispielsweise über eine zwischengeschaltete hydrodynamische Kupplung, erfolgen.

Demgemäß wird eine Ausgestaltung bevorzugt, für die das vom elektrischen Generator erzeugte Generatormoment bremsend auf die Wasserturbine wirkt, wobei durch eine Steuerung oder Regelung der Laststrom zur Anpassung der Statorspannungskomponenten (d, q) des elektrischen Generators und damit zur Vorgabe eines bestimmten Generatormoments eingestellt werden kann. Diese Steuervorrichtung für den elektrischen Generator wird beispielsweise mittels eines Frequenzumrichters realisiert, der einen Gleichspannungszwischenkreis, einen generatorseitigen Gleichrichter und einen netzseitigen Wechselrichter zur Netzaufschaltung des elektrischen Generators aufweist. Dabei gibt der generatorseitige Gleichrichter den Laststrom am Generatorstator vor.

Zur Begrenzung der aus der Strömung aufgenommenen Leistung wird die Wasserturbine ab einer vorgegebenen Nominalleistung durch die Führung in den Überdrehzahlbereich abgeregelt. Hierzu wird die Schnelllaufzahl $\lambda$ der Wasserturbine gegenüber der leistungsoptimalen Schnelllaufzahl $\lambda_{opt}$ zu größeren Werten verschoben. Dabei kann der Schnelllauf der Wasserturbine bis zur Durchgangsdrehzahl ausgeführt werden, für die lediglich die Reibungsverluste als Bremsmomente auf die Wasserturbine wirken, das heißt das Generatormoment fällt vollständig weg. Dabei hängt die Durchgangsdrehzahl von der mittleren Anströmungsgeschwindigkeit ab, wobei eine der Durchgangsdrehzahl zugeordnete Schnelllaufzahl $\lambda_d$ im Wesentlichen konstant bleibt.

Erfindungsgemäß wird die Abregelung eines gattungsgemäßen Strömungskraftwerks in einem Bereich ausgeführt, der von der der Durchgangsdrehzahl zugeordneten Schnelllaufzahl $\lambda_d$ hinreichend in Richtung zu niedrigeren Schnelllaufzahlen $\lambda$ beabstandet ist. Dabei resultiert eine Sicherheitsreserve bis die Wasserturbine durch eine vollständige Wegnahme des Generatormoments freigegeben wird. Zu diesem Zweck wird erfindungsgemäß die Charakteristik der Wasserturbine für den Betrieb bei Kavitation angepasst, da beim Eintritt der Kavitation die Leistungsbeiwert- und des Schubbeiwertkurven mit zunehmender Schnelllaufzahl $\lambda$ steil abfallen.

Die Wasserturbine wird so auf die Tauchtiefe des Strömungskraftwerks abgestimmt, dass im Überdrehzahlbereich, das heißt oberhalb einer leistungsoptimalen Schnelllaufzahl $\lambda_{opt}$, eine Kavitations-Schnelllaufzahlschwelle $\lambda_k$ festgelegt wird, die hinreichend deutlich unterhalb der der Durchgangsdrehzahl zugeordneten Schnelllaufzahl $\lambda_d$ liegt. Dabei sind in einer Steuervorrichtung Lastbegrenzungsmittel vorgesehen, die die Schnelllaufzahl $\lambda$ für die Wasserturbine derart einstellen, dass bei einer starken Anströmung ein Wert für $\lambda$ oberhalb der Kavitations-Schnelllaufzahlschwelle $\lambda_k$ folgt. Dabei wird Folgendes bewirkt:

Durch den abrupten Abfall des Leistungsbeiwerts der Wasserturbine beim Eintritt der Kavitation erfolgt eine Abregelung bereits bei verhältnismäßig kleinen Schnelllaufzahlen $\lambda$, sodass an der umlaufenden Einheit des Strömungskraftwerks geringere Fliehkräfte abzufangen sind. Damit können für den Normalbetrieb, das heißt im leistungsoptimalen Betrieb mit der leistungsoptimalen Schnelllaufzahl $\lambda_{opt}$, relativ hohe Schnelllaufzahlen $\lambda$ verwendet werden, sodass eine vereinfachte Lagerung resultiert. Es können insbesondere Gleitlager eingesetzt werden. Des Weiteren ermöglichen hinreichend hohe Drehzahlen im leistungsoptimalen Betrieb einen kleinbauenden elektrischen Generator.

Unter Starkanströmungsbedingungen, für die die Wasserturbine im Kavitationsbereich umläuft, resultieren hohe Blattspitzengeschwindigkeiten. Dabei entsteht beim Platzen der Kavitationsblasen Schall, der Meeresbewohner von den in diesem Fall schnell umlaufenden Rotorblättern fernhält. Des Weiteren reinigt die Kavitation maritimen Bewuchs auf den Rotorblättern.

Dabei bezieht sich eine Abregelung des Strömungskraftwerks neben der Begrenzung der von der Wasserturbine aufgenommenen Leistung bevorzugt auf eine Limitierung der Schubkraft der Wasserturbine in Rotationsrichtung. Die Schubkraft am Rotor kann oberhalb einer vorgegebenen Lastschwelle durch eine Verlagerung zu höheren Schnelllaufzahlen $\lambda$ reduziert werden. Dabei wird erfindungsgemäß der sich aus der erfindungsgemäßen Rotorcharakteristik ergebende scharfe Abfall des Schubbeiwerts $c_F$ beim Eintritt der Kavitation genutzt. Andernfalls sind für die Abregelung wesentlich höhere Drehzahlen notwendig, sodass die Gefahr besteht, dass die Durchgangsdrehzahl erreicht wird, wobei in diesem Fall eine weiter zunehmende mittlere Anströmungsgeschwindigkeit die von der Wasserturbine eingetragene Schublast sukzessiv erhöht.

Zur kavitationsbeständigen Auslegung des Rotors werden bevorzugt die von der Kavitation betroffenen Teile der Rotorblätter mit einer Schutzbeschichtung versehen. Zu diesem Zweck kann ein Elastomer aufgetragen werden. Als Alternative werden an den Stellen der Rotorblattoberfläche, an denen Kavitation zu erwarten ist, kavitationsbeständige Abdeckungen, zum Beispiel Kunststoffelemente, auf den lasttragenden Strukturen verankert. Dabei ist die Rotorcharakteristik so auf die Tauchtiefe abgestimmt, dass die Kavitation lokal auf den Blattspitzenbereich beschränkt ist. Bevorzugt ist der Bereich des Rotorblatts, auf dem bei einer Stellung am Scheitelpunkt des Rotorkreises Kavitation auftreten kann, auf das radial äußere Drittel der Längserstreckung des Blatts beschränkt.

Nachfolgend wird die Erfindung anhand eines Ausführungsbeispiels und im Zusammenhang mit Figurendarstellungen detaillierter erläutert, in denen im Einzelnen Folgendes dargestellt ist:

Figur 1    zeigt einen exemplarischen Verlauf des Leistungsbeiwerts für die Wasserturbine eines erfindungsgemäßen Strömungskraftwerks im Vergleich zu einer Ausführung gemäß dem Stand der Technik.

Figur 2    zeigt ein erfindungsgemäßes Strömungskraftwerk.

Figur 3    zeigt den leistungs- und lastabgeregelten Betrieb für ein erfindungsgemäßes Strömungskraftwerk.

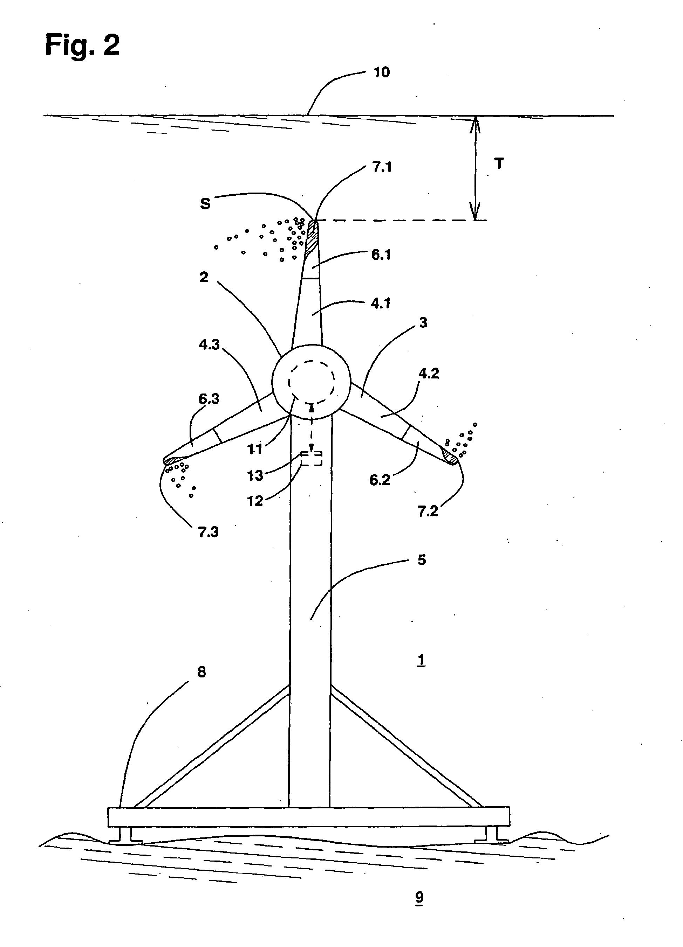

Figur 2 zeigt in schematisch vereinfachter Darstellung ein erfindungsgemäßes Strömungskraftwerk 1, das sich über einen Turm 5 und ein Schwerkraftfundament 8 gegen einen Gewässergrund 9 abstützt. Dabei liegt das Strömungskraftwerk 1 vollständig unter der Wasseroberfläche 10.

Die umlaufende Einheit 2 des Strömungskraftwerks 1 umfasst eine propellerförmige Wasserturbine 3 mit drei Rotorblättern 4.1, 4.2, 4.3. Jedes Rotorblatt 4.1, 4.2, 4.3 weist auf der radial äußeren Hälfte eine kavitationsbeständige Beschichtung 6.1, 6.2, 6.3 auf, die als Elastomerbeschichtung ausgebildet ist. Des Weiteren ist ein elektrischer Generator 11 bevorzugt drehstarr mit der Wasserturbine 3 verbunden. Diesem ist eine Steuereinrichtung 12 zugeordnet, die zur Einstellung des Generatormoments dient, wobei die Drehzahlführung der Wasserturbine 3 anhand einer vorgegebenen Schnelllaufzahl $\lambda$ erfolgt. Dabei umfasst die Steuervorrichtung 12 Lastbegrenzungsmittel 13 zur Einstellung von Schnelllaufzahlen $\lambda$ bis oberhalb einer Kavitations-Schnelllaufzahlschwelle $\lambda_k$.

Ferner zeigt Figur 2 das erfindungsgemäße Strömungskraftwerk beim Betrieb im Überdrehzahlbereich, das heißt für eine Schnelllaufzahl $\lambda$ oberhalb der leistungsoptimalen Schnelllaufzahl $\lambda_{opt}$ im Fall einer Starkanströmung. An den Spitzen der Rotorblätter 4.1, 4.2, 4.3 bilden sich an den Rotorblattteilbereichen 7.1, 7.2, 7.3 Kavitationsblasen, wobei die Kavitation beim Durchlaufen des Scheitelpunkts S am deutlichsten ausgeprägt ist und die maximale räumliche Ausdehnung auf dem jeweiligen Rotorblatt 4.1, 4.2, 4.3 aufweist. Dabei ist die Rotorcharakteristik in Abhängigkeit der Tauchtiefe T des Strömungskraftwerks 1 so ausgebildet, dass die Kavitation auf den Bereich der kavitationsbeständigen Beschichtung 6.1, 6.2, 6.3 beschränkt ist.

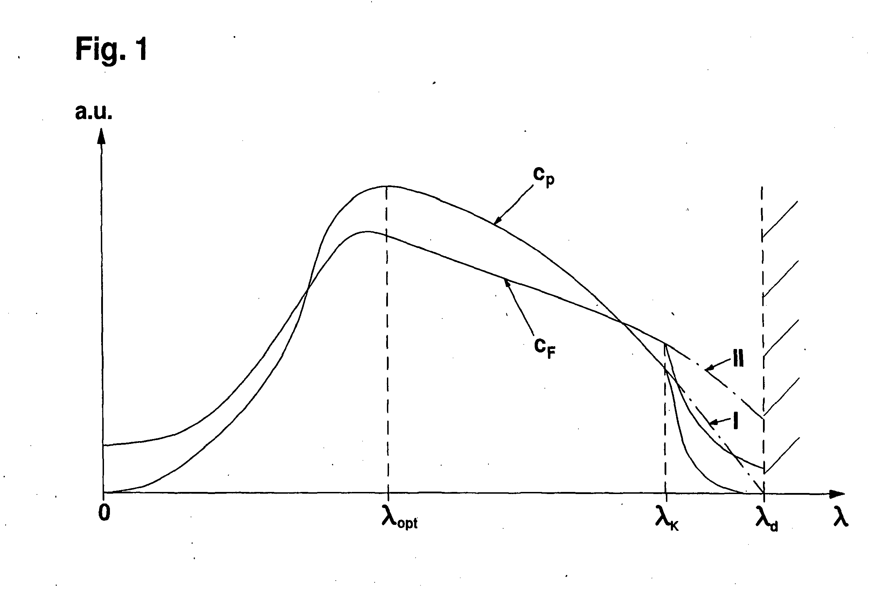

Figur 1 zeigt die Wirkung der für den Kavitationsbetrieb ausgelegten Wasserturbine 3. Dargestellt ist der Verlauf des Leistungsbeiwerts $c_p$ sowie des Schubbeiwerts $c_F$ gegen die Schnelllaufzahl $\lambda$. Dabei berechnet sich der Leistungsbeiwert $c_P$ aus der von der Wasserturbine 3 aufgenommenen Leistung P, der Dichte $\rho$ des Strömungsmediums, der gemittelten Anströmungsgeschwindigkeit v sowie dem Rotorradius r wie folgt:

$$c_p = \frac{P}{\frac{1}{2} \cdot \rho \cdot v^3 \cdot \pi \cdot r^2}$$

Der Leistungsbeiwert $c_P$ weist ein Maximum für eine leistungsoptimale Schnelllaufzahl $\lambda_{opt}$ auf.

Ferner bestimmt sich der Schubbeiwert $c_F$ aus der Schubkraft F in Richtung der Rotationsachse der Wasserturbine 3, der Dichte $\rho$ des Strömungsmediums, der gemittelten Anströmungsgeschwindigkeit v sowie dem Rotorradius r wie folgt:

$$c_F = \frac{F}{\frac{1}{2} \cdot \rho \cdot v^2 \cdot \pi \cdot r^2}$$

Die durchgezogenen Kurven in Figur 1 stellen die Charakteristik der Wasserturbine 3 gemäß einer erfindungsgemäßen Ausführung dar. Dabei liegt eine Ka-

vitations-Schnelllaufzahlschwelle $\lambda_k$ vor, oberhalb der Kavitation auftritt. Ersichtlich ist ein starker Abfall des Leistungsbeiwerts $c_P$ und des Schubbeiwerts $c_F$ für Schnelllaufzahlen $\lambda$ oberhalb der Kavitations-Schnelllaufzahlschwelle $\lambda_k$. Ein entsprechender Abfall liegt nicht für eine Wasserturbine 3 ohne den Eintritt der Kavitation vor. Dies ist anhand strichpunktiert dargestellten Kurven I und II für eine nicht für den Kavitationsbetrieb ausgelegte Wasserturbine dargestellt. Diese zeigen deutlich höhere Leistungsbeiwerte $c_p$ und Schubbeiwerte $c_F$, sodass die Abregelung eines nicht kavitierenden Gezeitenkraftwerks gegenüber der erfindungsgemäßen Ausführung zu deutlich höheren Schnelllaufzahlen $\lambda$ im Bereich der der Durchgangsdrehzahl $n_d$ zugeordneten Schnelllaufzahl $\lambda_d$ führt. Besonders bevorzugt wird eine Wasserturbine deren Rotordesign, insbesondere das gewählte Rotorprofil, im Verhältnis zur Tauchtiefe so angelegt ist, dass für die Kavitations-Schnelllaufzahlschwelle $\lambda_k$ Folgendes gilt: $\lambda_k < 0,9 \lambda_d$ und besonderes bevorzugt $\lambda_k < 0,8 \lambda_d$.

Durch die erfindungsgemäß genutzten Kavitationseffekte erfolgt eine Abregelung bereits bei relativ niedrigen Schnelllaufzahlen $\lambda$, sodass mit einer hinreichend hohen leistungsoptimalen Schnelllaufzahl $\lambda_{opt}$ gearbeitet werden kann. Dies ermöglicht einen Anlagennormalbetrieb mit einer schnell laufenden Wasserturbine 3, sodass sich die Lagerauslegung vereinfacht und eine kleinere Baugröße für den elektrischen Generator ausreicht.

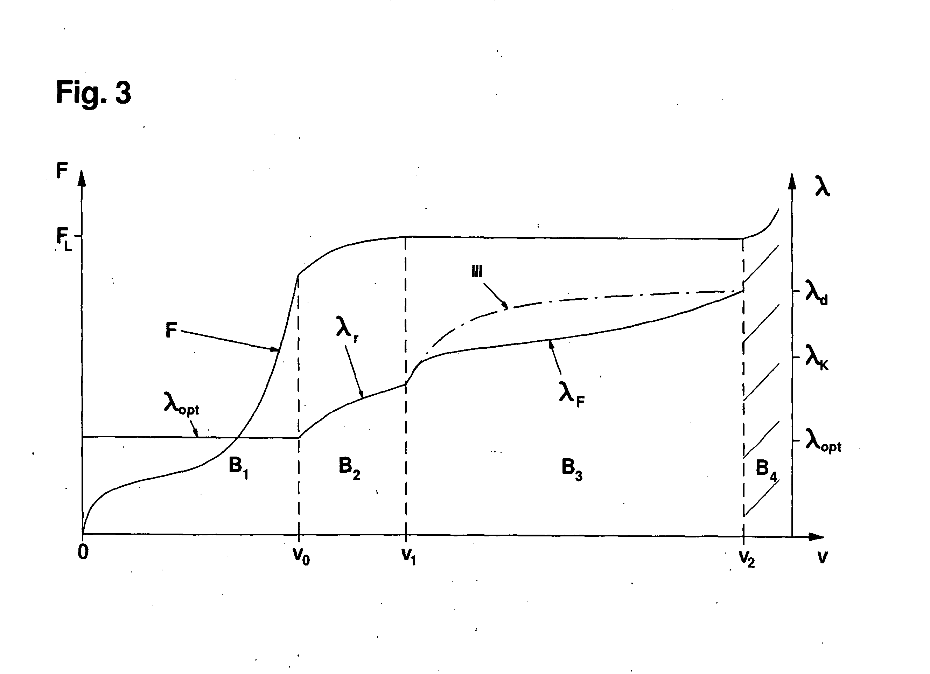

Figur 3 zeigt den Lastverlauf anhand der axialen Schublast F gegen eine gemittelte Anströmungsgeschwindigkeit v für ein erfindungsgemäßes Strömungskraftwerk 1. In einem ersten leistungsoptimalen Betriebsbereich $B_1$ arbeitet die Wasserturbine 3 mit einer leistungsoptimalen Schnelllaufzahl $\lambda_{opt}$. Beim Erreichen der Nennleistung bei der gemittelten Anströmungsgeschwindigkeit $v_0$ erfolgt ein Übergang zu einem leistungsbeschränkten Betriebsbereich $B_2$, wobei eine leistungsbegrenzte Schnelllaufzahl $\lambda_r$ verwendet wird. Ein weiterer Wechsel des Betriebszustands wird bei einer vorgegebenen Schublastschwelle $F_L$ ausgeführt, wobei die Wasserturbine anhand eines vorgegeben Verlaufs für eine lastbeschränkte Schnelllaufzahl $\lambda_F$ und damit in einem schublastbegrenzten Betriebsbereich $B_3$ geführt wird. Hierdurch erfolgt bezüglich der Schublast F eine Abregelung der Anlage für eine Starkanströmung mit einer gemittelten Anströmungsgeschwindigkeit v oberhalb $v_1$.

Eine gemittelte Anströmungsgeschwindigkeit v oberhalb $v_2$ stellt einen Bereich dar, für den die Durchgangsdrehzahl $n_d$ erreicht ist. Entsprechend bleibt die Schnelllaufzahl $\lambda$ auf einer gleichbleibenden, der Durchgangsdrehzahl $n_d$ zugeordneten Schnelllaufzahl $\lambda_d$. Demnach führt eine Erhöhung der gemittelten Anströmungsgeschwindigkeit v im Überlastbereich $B_4$ zu einer erneuten Zunahme der Schublast F, die über die Anlagenauslegung hinausgehen kann. Daher sollte im vorausgehenden lastbegrenzten Betriebsbereich $B_3$ bereits

für hinreichend kleine Schnelllaufzahlen $\lambda$ eine effektive Abregelung erreicht werden. Eine solche folgt aus dem erfindungsgemäßen Kavitationsbetrieb entlang der durchgezogenen Kurve im lastbegrenzten Betriebsbereich $B_3$ für die eingestellte lastbegrenzte Schnelllaufzahl $\lambda_F$. Im Vergleich hierzu verdeutlicht die strichpunktierte Kurve III den Verlauf ohne den Eintritt der Kavitation.

Weitere Ausgestaltungen der Erfindung sind im Rahmen der nachfolgenden Schutzansprüche denkbar, wobei die Erfindung neben den voranstehend dargestellten als Horizontalläufer ausgebildeten Anlagen auch auf Vertikalachsrotoren übertragen werden kann. Ferner sind Ausführungen mit einer Mantelturbine denkbar.

Bezugszeichenliste

| | |
|---|---|
| 1 | Strömungskraftwerk |
| 2 | umlaufende Einheit |
| 3 | Wasserturbine |
| 4.1, 4.2, 4.3 | Rotorblatt |
| 5 | Turm |
| 6.1, 6.2, 6.3 | kavitationsbeständige Beschichtung |
| 7.1, 7.2, 7.3 | Rotorblatt |
| 8 | Schwerkraftfundament |
| 9 | Gewässergrund |
| 10 | Wasseroberfläche |
| 11 | elektrischen Generator |
| 12 | Steuervorrichtung |
| 13 | Lastbegrenzungsmittel |

| | |
|---|---|
| $c_P$ | Leistungsbeiwert |
| $c_F$ | Schubbeiwert |
| $n_k$ | Durchgangsdrehzahl |
| $\lambda$ | Schnelllaufzahl |
| $\lambda_{opt}$ | leistungsoptimale Schnelllaufzahl |
| $\lambda_k$ | Kavitations-Schnelllaufzahlschwelle |
| $\lambda_d$ | der Durchgangsdrehzahl zugeordnete Schnelllaufzahl |
| $\lambda_F$ | lastbegrenzte Schnelllaufzahl |
| $\lambda_r$ | leistungsbegrenzte Schnelllaufzahl |
| $B_1$ | leistungsoptimalen Betriebsbereich |
| $B_2$ | leistungsbeschränkten Betriebsbereich |
| $B_3$ | lastbegrenzten Betriebsbereich |
| $B_4$ | Überlastbereich |

**Patentansprüche**

1. Verfahren zum Betrieb eines Strömungskraftwerks (1), umfassend
eine Wasserturbine (3) mit mehreren als Auftriebsläufer ausgebildeten Rotorblättern (4.1, 4.2, 4.3);
einen elektrischen Generator (11), der von der Wasserturbine (3) wenigstens mittelbar angetrieben wird;
wobei die Wasserturbine (3) zur Leistungsbegrenzung in einen Überdrehzahlbereich oberhalb einer leistungsoptimalen Schnelllaufzahl ($\lambda_{opt}$) geführt wird;
**dadurch gekennzeichnet, dass**
die Wasserturbine (3) so auf die Tauchtiefe (T) des Strömungskraftwerks (1) abgestimmt wird, dass im Überdrehzahlbereich ab einer Kavitations-Schnelllaufzahlschwelle ($\lambda_k$), die unterhalb einer der Durchgangsdrehzahl ($n_k$) zugeordneten Schnelllaufzahl ($\lambda_d$) liegt, wenigstens an einem Rotorblattteilbereich (7.1, 7.2, 7.3) Kavitation auftritt und die Wasserturbine (3) zur Lastbegrenzung mit Schnelllaufzahlen ($\lambda$) betrieben wird, die oberhalb der Kavitations-Schnelllaufzahlschwelle ($\lambda_k$) liegen.

2. Verfahren nach Anspruch 1, wobei zur Lastbegrenzung die Schnelllaufzahl ($\lambda$) durch eine Steuerung oder Regelung eines die Wasserturbine (3) bremsenden Generatormoments eingestellt wird.

3. Verfahren nach einem der Ansprüche 1 oder 2, wobei für die zur Lastbegrenzung einstellbaren Schnelllaufzahlen ($\lambda$) der Rotorblattteilbereich (7.1, 7.2, 7.3) an dem Kavitation auftritt räumlich begrenzt ist.

4. Verfahren nach Anspruch 3, wobei der Rotorblattteilbereich (7.1, 7.2, 7.3) an dem Kavitation auftritt auf das radial äußere Drittel der Längserstreckung der Rotorblätter (4.1, 4.2, 4.3) begrenzt ist.

5. Verfahren nach einem der vorausgehenden Ansprüche, wobei die der Durchgangsdrehzahl zugeordnete Schnelllaufzahl ($\lambda_d$) für eine Anströmung erreicht wird, die eine der Anlagenauslegung zugrundeliegende Maximalanströmung übersteigt.

6. Strömungskraftwerk, umfassend
eine Wasserturbine (3) mit mehreren als Auftriebsläufer ausgebildeten Rotorblättern (4.1, 4.2, 4.3);
einen elektrischen Generator (11), der von der Wasserturbine (3) wenigstens mittelbar angetrieben wird;
eine Steuervorrichtung (12) für den elektrischen Generator (11), zur Führung der Wasserturbine (3) in einen Überdrehzahlbereich oberhalb einer leistungsoptimalen Schnelllaufzahl ($\lambda_{opt}$);
**dadurch gekennzeichnet, dass**
die Wasserturbine (3) so auf die Tauchtiefe (T) des Strömungskraftwerks (1) abgestimmt ist, dass im Überdrehzahlbereich ab einer Kavitations-Schnelllaufzahlschwelle ($\lambda_k$), die unterhalb einer der Durchgangsdrehzahl ($n_d$) zugeordneten Schnelllaufzahl ($\lambda_d$) liegt, wenigstens an einem Rotorblattteilbereich (7.1, 7.2, 7.3) Kavitation auftritt und die Steuervorrichtung (12) Lastbegrenzungsmittel (13) zur Einstellung von Schnelllaufzahlen ($\lambda$) für die Wasserturbine, die oberhalb der Kavitations-Schnelllaufzahlschwelle ($\lambda_k$) liegen, umfasst.

**7.** Strömungskraftwerk nach Anspruch 6, wobei die Rotorblätter (4.1, 4.2, 4.3) eine kavitationsbeständige Beschichtung (6.1, 6.2, 6.3) und/oder kavitationsbeständige Bauteile umfassen.

**8.** Strömungskraftwerk nach Anspruch 7, wobei die kavitationsbeständige Beschichtung (6.1, 6.2, 6.3) eine Elastomerschicht umfasst.

**9.** Strömungskraftwerk nach einem der Ansprüche 7 oder 8, wobei die kavitationsbeständige Beschichtung (6.1, 6.2, 6.3) und/oder die kavitationsbeständigen Bauteile auf dem radial äußeren Drittel der Längserstreckung der Rotorblätter (4.1, 4.2, 4.3) vorliegen.

**Claims**

**1.** A method for operating a marine current power plant (1), comprising
a water turbine (3) with several rotor blades (4.1, 4.2, 4.3) arranged as buoyancy rotors;
an electric generator (11) which is driven at least indirectly by the water turbine (3);
wherein the water turbine (3) is guided for power limitation in an overspeed range above a power-optimal tip speed ratio ($\cdot_{opt}$);
**characterized in that**
the water turbine (3) is adjusted to the immersion depth (T) of the marine current power plant (1) in such a way that cavitation occurs on at least one rotor blade section (7.1, 7.2, 7.3) in the overspeed range from a cavitation tip speed ratio threshold ($\lambda_k$) which lies below a tip speed ratio ($\lambda_d$) associated with a runaway speed ($n_k$), and the water turbine (3) is operated for load limitation at tip speed ratios (A) which lie above the cavitation tip speed ratio threshold ($\lambda_k$).

**2.** A method according to claim 1, wherein the tip speed ratio (A) is set for load limitation by the control or feedback control of a generator torque braking the water turbine (3).

**3.** A method according to one of the claims 1 or 2, wherein the rotor blade section (7.1, 7.2, 7.3) on which cavitation occurs is spatially limited for the tip speed ratios (A) adjustable for limiting the load.

**4.** A method according to claim 3, wherein the rotor blade section (7.1, 7.2, 7.3) on which cavitation occurs is limited to the radially outer third of the longitudinal extension of the rotor blades (4.1, 4.2, 4.3).

**5.** A method according to one of the preceding claims, wherein the tip speed ratio ($\lambda_d$) associated with the runaway speed is reached for inflow which exceeds the maximum inflow on which the plant configuration is based.

**6.** A marine current power plant, comprising
a water turbine (3) with several rotor blades (4.1, 4.2, 4.3) arranged as buoyancy rotors;
an electric generator (11) which is driven at least indirectly by the water turbine (3);
a control apparatus (12) for the electric generator (11), for guiding the water turbine (3) to an overspeed range above a power-optimal tip speed ratio ($\lambda_{opt}$);
**characterized in that**
the water turbine (3) is adjusted to the immersion depth (T) of the marine current power plant (1) in such a way that cavitation occurs on at least one rotor blade section (7.1, 7.2, 7.3) in the overspeed range from a cavitation tip speed ratio threshold ($\lambda_k$) which lies below a tip speed ratio ($\lambda_d$) associated with a runaway speed ($n_k$), and the control apparatus (12) comprises load-limiting means (13) for setting tip speed ratios (A) for the water turbine which lie above the cavitation tip speed ratio threshold ($\lambda_k$).

**7.** A marine current power plant according to claim 6, wherein the rotor blades (4.1, 4.2, 4.3) comprise a cavitation-resistant coating (6.1, 6.2, 6.3) and/or cavitation-resistant components.

**8.** A marine current power plant according to claim 7, wherein the cavitation-resistant coating (6.1, 6.2, 6.3) comprises an elastomeric layer.

**9.** A marine current power plant according to one of the claims 7 or 8,
wherein the cavitation-resistant coating (6.1, 6.2, 6.3) and/or the cavitation-resistant components are present on the radially outer third of the longitudinal extension of the rotor blades (4.1, 4.2, 4.3).

**Revendications**

**1.** Procédé d'exploitation d'une centrale marémotrice (1) comportant :

une turbine à eau (3) avec plusieurs pales de rotor en forme d'aérogénérateurs (4.1, 4.2, 4.3);
un générateur électrique (11), qui est entraîné au moins indirectement par la turbine à eau (3) ;
où la turbine à eau (3) est guidée pour limiter la puissance dans une zone de surrégime au-dessus de la vitesse spécifique optimale en terme de puissance ($\lambda_{opt}$) ;
caractérisé en ce
la turbine à eau (3) est adaptée à la profondeur de pénétration (T) de la centrale marémotrice (1) de telle sorte que dans la zone de surrégime à partir d'un seuil de vitesse spécifique de cavi-

tation ($\lambda_k$), correspondant à une vitesse spécifique ($\lambda_d$) associée à la vitesse d'emballement ($n_k$), une cavitation se produit au moins au niveau d'une partie de pale de rotor (7.1, 7.2, 7.3) et la turbine à eau (3) est exploitée pour limiter la charge avec des vitesses spécifiques ($\lambda$) supérieures au seuil de vitesse spécifique de cavitation ($\lambda_k$).

**2.** Procédé selon la revendication 1, où la vitesse spécifique ($\lambda$) est réglée pour limiter la charge en commande ou en régulant un couple de générateur freinant la turbine à eau (3).

**3.** Procédé selon l'une des revendications 1 ou 2, où la partie de pale de rotor (7.1, 7.2, 7.3) est limitée dans l'espace, partie au niveau de laquelle se produit la cavitation et prévue pour les vitesses spécifiques ($\lambda$) réglables pour limiter la charge.

**4.** Procédé selon la revendication 3, où la partie de pale de rotor (7.1, 7.2, 7.3) au niveau de laquelle se produit la cavitation, est limitée au tiers externe radial de l'étendue longitudinale des pales de rotor (4.1, 4.2, 4.3).

**5.** Procédé selon l'une quelconque des revendications précédentes, où la vitesse spécifique ($\lambda_d$) associée à la vitesse d'emballement est atteinte pour un écoulement dépassant un écoulement maximal à la base de la conception de l'installation.

**6.** Centrale marémotrice, comprenant
une turbine à eau (3) avec plusieurs pales de rotor (4.1, 4.2, 4.3) en forme d'aérogénérateurs ;
un générateur électrique (11), qui est entraîné au moins indirectement par la turbine à eau (3) ;
un dispositif de commande (12) pour le générateur électrique (11), pour guider la turbine à eau (3) dans une zone de surrégime au-dessus de la vitesse spécifique optimale en terme de puissance ($\lambda_{opt}$) ;
caractérisée en ce
la turbine à eau (3) est adaptée à la profondeur de pénétration (T) de la centrale marémotrice (1) de telle sorte que dans la zone de surrégime à partir d'un seuil de vitesse spécifique de cavitation ($\lambda_k$), correspondant à une vitesse spécifique ($\lambda_d$) associée à la vitesse d'emballement ($n_k$), une cavitation se produit au moins au niveau d'une partie de pale de rotor (7.1, 7.2, 7.3) et le dispositif de commande (12) contient de moyens limiteurs de charge (13) pour le réglage des vitesses spécifiques ($\lambda$) pour la turbine à eau, vitesses spécifiques supérieures au seuil de vitesse spécifique de cavitation ($\lambda_k$).

**7.** Centrale marémotrice selon la revendication 6, où les pales de rotor (4.1, 4.2, 4.3) comportent une couche résistante à la cavitation (6.1, 6.2, 6.3) et/ou des composants résistants à la cavitation.

**8.** Centrale marémotrice selon la revendication 7, où la couche résistante à la cavitation (6.1, 6.2, 6.3) renferme une couche élastomère.

**9.** Centrale marémotrice selon l'une des revendications 7 ou 8, où la couche résistante à la cavitation (4.1, 4.2, 4.3) et/ou les composants résistants à la cavitation sont aménagés sur le tiers externe radial de l'étendue longitudinale des pales de rotor (4.1, 4.2, 4.3).

Fig. 1

# Fig. 2

# Fig. 3

EP 2 729 695 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102008053732 B3